# EUROPÄISCHE PATENTSCHRIFT

(11) **EP 2 505 918 B1**
(45) Veröffentlichungstag und Bekanntmachung des Hinweises auf die Patenterteilung: **04.09.2019**
(21) Anmeldenummer: 12162369.8
(22) Anmeldetag: 30.03.2012
(51) Int. Cl.: F23D 14/54, B23K 9/167, B23K 9/173, B23K 9/16

(54) **Gasdüse und Schutzgasschweißbrenner**
Gas nozzle and protective gas blowpipe
Buse à gaz et brûleur de soudage à gaz protecteur

(30) Priorität: 31.03.2011 DE 102011015661
(43) Veröffentlichungstag der Anmeldung: 03.10.2012
(73) Patentinhaber: TBi Industries GmbH, 35463 Fernwald (DE)
(72) Erfinder: Binzel, Oliver, 4132 Muttenz (CH)
(74) Vertreter: advotec.

(56) Entgegenhaltungen:
- DE-A1- 4 446 015
- DE-C1- 4 143 181
- DE-C1- 4 226 014
- DE-U1- 9 311 142

## Beschreibung

Die Erfindung betrifft eine Gasdüse für Schutzgasschweißbrenner, wobei die Gasdüse aus einer Hülse gebildet ist, wobei die Gasdüse an einem brennerseitigen Ende der Hülse eine Befestigungsvorrichtung zur Verbindung der Gasdüse mit einer Aufnahmevorrichtung eines Schutzgasschweißbrenners aufweist, und wobei die Befestigungsvorrichtung einen Innenkonus umfasst. Weiter betrifft die Erfindung einen Schutzgasschweißbrenner, der mit einer derartigen Gasdüse verbindbar ist.

Schutzgasschweißbrenner weisen an einem distalen, prozessseitigen Ende regelmäßig eine Gasdüse auf. Die Gasdüse dient dazu, einen Schutzgasstrom zu formen und möglichst verwirbelungsfrei auf ein Schweißbad zu lenken. Die Gasdüse ist ein Verschleißteil, welches regelmäßig gereinigt und nach entsprechender Benutzungsdauer ausgetauscht werden muss.

Eine Aufnahme bzw. Aufnahmevorrichtung für die Gasdüse am Schutzgasschweißbrenner beeinflusst wesentlich eine Funktion, eine Leistungsfähigkeit und eine Lebensdauer des Schutzgasschweißbrenners.

An Gasdüsen werden eine Reihe unterschiedlicher Anforderungen gestellt. Da ein regelmäßiger Verschleiß auftritt, müssen die Gasdüsen vergleichsweise häufig erneuert werden, was einen niedrigen Preis für Gasdüsen erfordert. Gasdüsen müssen daher effizient in großen Stückzahlen produzierbar sein. Weiter ist einerseits ein fester Sitz der Gasdüse im montierten Zustand, ohne eine Gefahr eines selbsttätigen Lösens, erforderlich, und andererseits soll die Gasdüse in einem Wartungsfall einfach von Hand lösbar sein. Auch ist die Gasdüse in einem Betrieb einer hohen Temperaturbelastung durch einen am Schutzgasschweißbrenner gezündeten Lichtbogen ausgesetzt. Für einen Schweißprozess ist jedoch eine möglichst tiefe Temperatur der Gasdüse vorteilhaft. Aus diesem Grund sollte die Gasdüse möglichst so an dem Schutzgasschweißbrenner befestigt sein, dass eine von der Gasdüse aufgenommene Wärmeenergie möglichst gut an den Schutzgasschweißbrenner weitergeleitet bzw. an diesen abgegeben und abgeführt wird.

Gasdüsen nach dem relevanten Stand der Technik sind beispielsweise aus den Schriften DE9311142 U1 und DE4446015 A1 bekannt.

Bekannte Gasdüsen sind aus einer Hülse bzw. einem weitestgehend zylindrischen Grundkörper ausgebildet, der an einem hinteren, brennerseitigen Ende mit Längsschlitzen versehen ist. Dadurch kann sich ein Innendurchmesser der hülsenförmigen Gasdüse an einen Außendurchmesser einer zylindrischen oder leicht konischen Aufnahmevorrichtung bzw. Aufnahme des Schutzgasschweißbrenners anpassen. Mit fortschreitender Betriebsdauer verschleißt jedoch häufig die Aufnahme für die Gasdüse. Dies hat zur Folge, dass die Gasdüse nicht mehr an eine Form der Aufnahme angepasst werden kann und somit keinen festen Sitz am Schutzgasschweißbrenner mehr erreicht. Besonders schädlich für einen Schweißprozess ist, wenn bei einem fortgeschrittenen Verschleiß Umgebungsluft durch die Längsschlitze in der Gasdüse angesaugt wird und das Schutzgas innerhalb der Gasdüse kontaminiert. Es sind dann keine befriedigende Schweißergebnisse zu erreichen. In diesem Fall muss der Schutzgasschweißbrenner ausgetauscht werden.

Andere, bekannte Gasdüsen sind mit einem Gewinde ausgestattet, welches ein festes Anziehen der Gasdüse auf einen Gasdüsensitz bzw. einer Aufnahmevorrichtung des Schutzgasschweißbrenners erlaubt. Allerdings ist hier ein guter Wärmeübergang von der Gasdüse auf den Schutzgasschweißbrenner nur schwer erreichbar, da Kontaktflächen innerhalb des Befestigungsgewindes und an einem hinteren Anschlag bzw. Stirnfläche der Gasdüse vergleichsweise klein sind.

Ebenfalls bekannt sind Gasdüsen und Schutzgasschweißbrenner, welche die beiden vorbeschriebenen Grundprinzipien kombinieren. Ein Gewinde ist dann auf einer leicht konischen Fläche angebracht und die Gasdüse ist mit Längsschlitzen versehen. Diese Ausführungsform bringt jedoch die gleichen Nachteile mit sich, wie die Ausführungsform der Gasdüse ohne Gewinde.

Der vorliegenden Erfindung liegt daher die Aufgabe zugrunde, eine Gasdüse und einen Schutzgasschweißbrenner vorzuschlagen, die eine toleranz- und verschleißunempfindliche Verbindung mit einem guten thermischen Kontakt ermöglichen.

Diese Aufgabe wird durch eine Gasdüse mit den Merkmalen des Anspruchs 1 und einen Schutzgasschweißbrenner mit den Merkmalen des Anspruchs 11 sowie einer Brenneranordnung mit den Merkmalen des Anspruchs 13 gelöst.

Die erfindungsgemäße Gasdüse für Schutzgasschweißbrenner ist aus einer Hülse gebildet, wobei die Gasdüse an einem brennerseitigen Ende der Hülse eine Befestigungsvorrichtung zur Verbindung der Gasdüse mit einer Aufnahmevorrichtung eines Schutzgasschweißbrenners aufweist, wobei die Befestigungsvorrichtung einen Innenkonus umfasst, wobei die Befestigungsvorrichtung weiter eine zylindrische Führungsfläche und eine Befestigungseinrichtung umfasst, und wobei die Befestigungseinrichtung zur formschlüssigen Verbindung der Gasdüse mit einem Schutzgasschweißbrenner dient.

Die Hülse der Gasdüse entspricht einem weitestgehend zylindrischen Grundkörper, der an einem proximalen Ende bzw. dem dem Schutzgasschweißbrenner zugewandten Ende der Hülse die Befestigungsvorrichtung aufweist bzw. ausbildet. Die Befestigungsvorrichtung dient zu der Verbindung der Gasdüse mit einer übereinstimmenden Aufnahmevorrichtung eines Schutzgasschweißbrenners. Innerhalb der Hülse bzw. des Grundkörpers ist die zylindrische, gerade Führungsfläche der Befestigungsvorrichtung ausgebildet. Weiter umfasst die Befestigungsvorrichtung die Befestigungseinrichtung bzw. ein Befestigungselement, welches zu einer Fixierung der Gasdüse auf dem Schutzgasschweißbrenner dient. Mittels der Befestigungseinrichtung ist die Gasdüse formschlüssig mit dem Schutzgasschweißbrenner verbindbar. So wird es möglich über den Innenkonus eine innige, verhältnismäßig großflächige Verbindung der Gasdüse mit dem Schutzgasschweißbrenner auszubilden, über die Wärmeenergie von der Gasdüse auf den Schutzgasschweißbrenner besonders gut übertragen werden kann. Mit der Befestigungseinrichtung ist es dann möglich, unabhängig von dem Innenkonus, eine mechanisch sichere Verbindung zwischen der Gasdüse und dem Schutzgasschweißbrenner herzustellen. Die zylindrische Führungsfläche dient ebenfalls zur verbesserten Übertragung von Wärmeenergie und zu Zentrierung und Führung der Gasdüse auf dem Schutzgasschweißbrenner.

An einem prozessseitigen Ende bzw. distalen Ende der Hülse bzw. des Grundkörpers kann eine konische Verjüngung ausgebildet sein. Dabei kann eine Außenfläche und/oder eine Innenfläche der Hülse die konische Verjüngung aufweisen. Mittels der konischen Verjüngung kann Schutzgas gezielt auf ein Schweißbad bzw. eine Schmelze geleitet werden.

Die Befestigungseinrichtung ist weiter als ein insbesondere zylindrisches Innengewinde ausgebildet, welches an, in oder auf der zylindrischen Führungsfläche ausgebildet sein kann, wobei das Innengewinde dann zum Verschrauben der Gasdüse mit einem Schutzgasschweißbrenner dient. So kann innerhalb einer Oberfläche der zylindrischen Führungsfläche oder auf der Oberfläche der zylindrischen Führungsfläche ein Gewinde mit wenigen Gewindegängen ausgebildet sein, sodass die Gasdüse einfach auf den Schutzgasschweißbrenner aufgeschraubt werden kann. Vorzugsweise kann das Innengewinde als ein Trapezgewinde an einem proximalen Ende der zylindrischen Führungsfläche ausgebildet sein. Das Innengewinde kann dann zwischen den zylindrischen Führungsflächen und dem Innenkonus ausgebildet sein.

Vorteilhaft kann der Innenkonus einen Steigungswinkel zwischen 2° bis 5° aufweisen. So wird es möglich auch mittels des Innenkonus die Gasdüse kraftschlüssig auf dem Schutzgasschweißbrenner sicher zu befestigen.

Der Steigungswinkel des Innenkonus kann 0,5° kleiner ausgebildet sein, als ein Steigungswinkel eines Außenkonus einer Aufnahmevorrichtung eines Schutzgasschweißbrenners an den die Gasdüse fixierbar ist. So kann eine Aufweitung des Innenkonus der Hülse bei einer Verbindung der Gasdüse mit dem Schutzgasschweißbrenner berücksichtigt werden. Weiter kann eine erwünschte Klemmkraft ausgebildet werden. Auch wird eine gasdichte Anlage des Innenkonus an der Aufnahmevorrichtung des Schutzgasschweißbrenners sowie ein verbesserter Übergang von Wärmeenergie ermöglicht.

Besonders vorteilhaft ist es, wenn ein kleinster Durchmesser des Innenkonus der Gasdüse gleich groß ausgebildet ist, wie ein kleinster Durchmesser eines Außenkonus eines Schutzgasschweißbrenners. Vorzugsweise ist die Befestigungsvorrichtung der Gasdüse im Wesentlichen übereinstimmend zu einer Aufnahmevorrichtung eines Schutzgasschweißbrenners ausgebildet. Da der kleinste Durchmesser des Innenkonus weniger leicht verformbar ist als ein größter Durchmesser des Innenkonus kann der kleinste Durchmesser des Innenkonus bevorzugt auf den kleinsten Durchmesser des Außenkonus abgestimmt sein.

Eine Klemmkraft zwischen Innenkonus und Aufnahmevorrichtung des Schutzgasschweißbrenners kann besonders gut ausgebildet werden, wenn an dem brennerseitigen Ende der Hülse zumindest zwei, vorzugsweise vier, äquidistante, in einer Längsrichtung der Hülse verlaufende, durchgehende Längsschlitze ausgebildet sind. Es kann natürlich auch vorgesehen sein, eine andere Anzahl von Längsschlitzen auszubilden. Die Längsschlitze bewirken ein leichteres Aufweiten des Innenkonus bei einem Aufschieben auf eine Aufnahmevorrichtung eines Schutzgasschweißbrenners. Die dementsprechend ausgebildeten Kreisabschnitte des Innenkonus wirken dann jeweils in Art einer Blattfeder.

Dazu können die Längsschlitze zumindest über einen Teilbereich des Innenkonus verlaufen. Dies schließt jedoch nicht aus, dass die Längsschlitze über eine gesamte Länge des Innenkonus verlaufen können.

Eine gasdichte Verbindung von Innenkonus und Aufnahmevorrichtung kann insbesondere dann erzielt werden, wenn die Längsschlitze von dem brennerseitigen bzw. proximalen Ende der Hülse zu einem kleinsten Durchmesser des Innenkonus verlaufen, wobei die Längsschlitze von dem kleinsten Durchmesser beabstandet sein können. Ein Bereich bzw. Abschnitt des Innenkonus weist demnach keine Längsschlitze auf, wodurch sichergestellt werden kann, dass keine Umgebungsluft zwischen Gasdüse und Schutzgasschweißbrenner eindringen kann.

Eine sichere, mechanische Befestigung der Gasdüse auf dem Schutzgasschweißbrenner kann noch weiter verbessert werden, wenn die Befestigungsvorrichtung ein Federelement umfasst, das in einem Bereich der Längsschlitze um die Hülse herum angeordnet sein kann.

Das Federelement kann ein Federring sein, der die Hülse im Bereich der Längsschlitze umfänglich umgibt. Der Federring kann dann dicht an einem Außenumfang der Hülse anliegen und einem Aufbiegen des Innenkonus eine Federkraft entgegensetzen.

Der erfindungsgemäße Schutzgasschweißbrenner umfasst eine Aufnahmevorrichtung zur Verbindung des Schutzgasschweißbrenners mit einer Befestigungsvorrichtung und einer Gasdüse, wobei die Aufnahmevorrichtung einen Außenkonus umfasst, wobei die Aufnahmevorrichtung weiter einen zylindrischen Abschnitt und eine Aufnahmeeinrichtung umfasst, und wobei die Aufnahmeeinrichtung eine Einrichtung zur formschlüssigen Verbindung des Schutzgasschweißbrenners mit einer Gasdüse dient.

An einem distalen Ende des Schutzgasschweißbrenners ist folglich die Aufnahmevorrichtung in Übereinstimmung mit einer Befestigungsvorrichtung einer Gasdüse ausgebildet. Insbesondere bildet die Aufnahmevorrichtung einen konischen Abschnitt bzw.

Teilbereich sowie den zylindrischen Abschnitt bzw. Teilbereich aus. Ergänzend ist ein Befestigungselement bzw. die Aufnahmeeinrichtung vorgesehen. Zu den vorteilhaften Wirkungen des erfindungsgemäßen Schutzgasschweißbrenners wird ergänzend auf die Vorteilsbeschreibung der erfindungsgemäßen Gasdüse verwiesen.

Die Aufnahmeeinrichtung ist als ein zylindrisches Außengewinde ausgebildet, welches an, in oder auf dem zylindrischen Abschnitt ausgebildet ist, wobei das Außengewinde zum Verschrauben des Schutzgasschweißbrenners mit einer Gasdüse dient.

Vorzugsweise kann der Außenkonus bzw. ein konischer Abschnitt der Aufnahmevorrichtung kürzer sein, als eine Gewindelänge des Außengewindes. Aufgrund einer Verwendung des Außengewindes ist es dann nicht mehr notwendig einen vergleichsweise langen Außenkonus auszubilden.

Weitere vorteilhafte Ausführungsformen eines Schutzgasschweißbrenners ergeben sich bei einer übereinstimmenden Ausbildung der Aufnahmevorrichtung mit einer Befestigungsvorrichtung einer Gasdüse aus den Merkmalsbeschreibungen der auf den Vorrichtungsanspruch 1 rückbezogenen Unteransprüche.

Die erfindungsgemäße Brenneranordnung umfasst eine Gasdüse nach einem der Ansprüche 1 bis 10 und einen Schutzgasschweißbrenner nach einem der Ansprüche 11 bis 12.

Nachfolgend wird eine bevorzugte Ausführungsform der Erfindung unter Bezugnahme auf die beigefügten Zeichnungen näher erläutert.

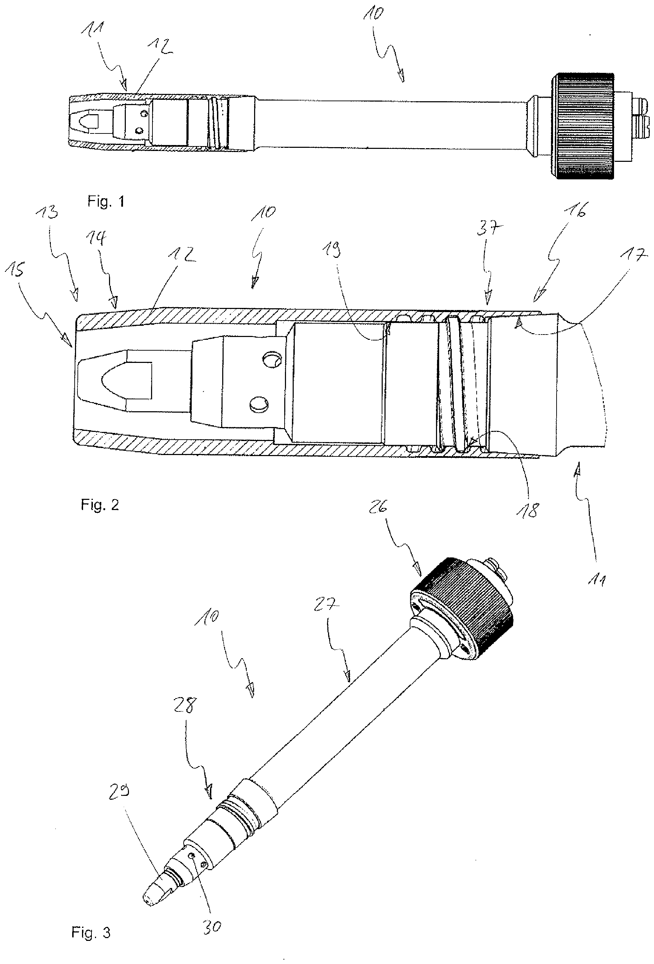

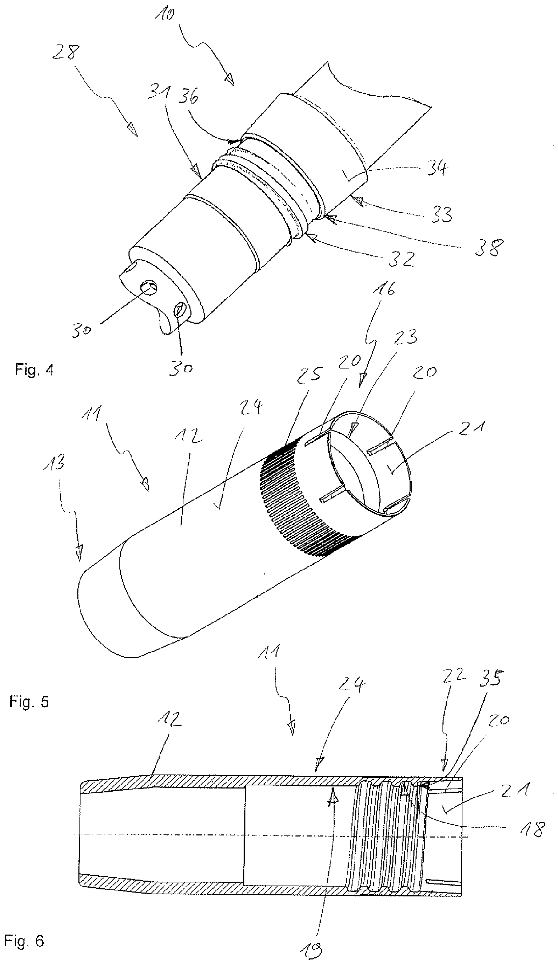

Es zeigen:**Fig. 1** Einen Schutzgasschweißbrenner mit einer Gasdüse in einer Längsschnittansicht; **Fig. 2** eine vergrößerte Teilansicht aus **Fig. 1; Fig. 3** eine perspektivische Darstellung des Schutzgasschweißbrenners; **Fig. 4** eine vergrößerte Teilansicht aus **Fig. 3****;** **Fig. 5** eine perspektivische Darstellung der Gasdüse; **Fig. 6** eine Längsschnittdarstellung der Gasdüse.

Eine Zusammenschau der **Fig. 1** bis **6** zeigt einen Schutzgasschweißbrenner 10 mit einer Gasdüse 11 in verschiedenen Darstellungen. Die Gasdüse 11 ist als eine Hülse 12 ausgebildet und weist an einem distalen Ende 13 eine konische Verjüngung 14 auf, die eine Düsenöffnung 15 ausbildet. An einem proximalen Ende 16 der Hülse 12 ist ein Innenkonus 17 ausgebildet. An den Innenkonus schließt ein Innengewinde 18 an, welches in eine zylindrische Führungsfläche 19 geformt ist. Weiter sind ausgehend von dem proximalen Ende 16 vier Längsschlitze 20 in der Hülse 12 ausgebildet. Die Längsschlitze 20 sind äquidistante relativ zueinander angeordnet und verlaufen über eine Innenfläche 21 in einem Teilabschnitt 22. Ein kleinster Durchmesser 23 des Innenkonus 17 wird von den Längsschlitzen 20 nicht erreicht. Auf einer Außenfläche 24 der Hülse 12 ist zur verbesserten manuellen Handhabung der Hülse 12 eine Rändelung 25 umfänglich abschnittsweise ausgebildet.

Der Schutzgasschweißbrenner 10 besteht im Wesentlichen aus einem Anschlussstück 26, einem Rohrabschnitt 27 und einer Aufnahmevorrichtung 28 zur Befestigung der Gasdüse 11. Weiter sind an der Aufnahmevorrichtung 28 eine Düsenspitze 29 zur Führung eines hier nicht dargestellten Schweißdrahtes und Gasaustrittsöffnungen 30 vorgesehen. Die Aufnahmevorrichtung 28 bildet einen zylindrischen Abschnitt 31 mit einem Außengewinde 32 sowie einen Außenkonus 33 aus. Der zylindrische Abschnitt 31 ist so ausgebildet, dass er an der zylindrischen Führungsfläche 19 der Gasdüse 11 zur Anlage gelangt. Weiter ist das Außengewinde 32 so ausgebildet, dass es mit dem Innengewinde 18 verschraubbar ist. Eine Außenfläche 34 des Außenkonus 33 schmiegt sich ebenfalls dicht an die Innenfläche 21 des Innenkonus 17 an. Dabei kann sich die Hülse 12 an dem proximalen Ende 16 aufgrund der Längsschlitze 20 leicht aufweiten. Um eine Einschraublänge zu begrenzen, ist an der Gasdüse 11 eine innere Stirnfläche 35 und an der Aufnahmevorrichtung 28 eine äußere Stirnfläche 36 ausgebildet, die zusammen einen Anschlag 37 ausbilden. Die äußere Stirnfläche 36 schließt direkt an einen kleinsten Durchmesser 38 des Außenkonus 33 an.

## Patentansprüche

1. Gasdüse (11) für Schutzgasschweißbrenner, wobei die Gasdüse aus einer Hülse (12) gebildet ist, wobei die Gasdüse an einem brennerseitigen Ende (16) der Hülse eine Befestigungsvorrichtung zur Verbindung der Gasdüse mit einer Aufnahmevorrichtung (28) eines Schutzgasschweißbrenners (10) aufweist, wobei die
Befestigungsvorrichtung einen Innenkonus (17) umfasst,
**dadurch gekennzeichnet,**
**dass** der Innenkonus (17) am brennerseitigen Ende (16) der Hülse (12) ausgebildet ist, und
**dass** die Befestigungsvorrichtung weiter eine innerhalb der Hülse ausgebildete zylindrische Führungsfläche (19) und ein Innengewinde (18) umfasst, welches an der zylindrischen Führungsfläche (19) ausgebildet ist, wobei das Innengewinde zum Verschrauben der Gasdüse (11) mit einem Schutzgasschweißbrenner (10) dient.

2. Gasdüse nach Anspruch 1,
**dadurch gekennzeichnet,**
**dass** an einem prozessseitigen Ende (13) der Hülse (12) eine konische Verjüngung (14) ausgebildet ist.

3. Gasdüse nach einem der vorangehenden Ansprüche,
**dadurch gekennzeichnet,**
**dass** der Innenkonus (17) einen Steigungswinkel von 2° bis 5° aufweist.

4. Gasdüse nach Anspruch 3,
**dadurch gekennzeichnet,**
**dass** der Steigungswinkel des Innenkonus (17) 0,5° kleiner ausgebildet ist, als ein Steigungswinkel eines Außenkonus (33) einer Aufnahmevorrichtung (28) eines Schutzgasschweißbrenners (10) an dem die Gasdüse (11) fixierbar ist.

5. Gasdüse nach einem der vorangehenden Ansprüche,
**dadurch gekennzeichnet,**
**dass** ein kleinster Durchmesser (23) des Innenkonus (17) der Gasdüse gleich groß ausgebildet ist, wie ein kleinster Durchmesser (38) eines Außenkonus (33) eines Schutzgasschweißbrenners (10).

6. Gasdüse nach einem der vorangehenden Ansprüche,
**dadurch gekennzeichnet,**
**dass** an dem brennerseitigen Ende (16) der Hülse (12) zumindest zwei Längsschlitze (20) ausgebildet sind.

7. Gasdüse nach Anspruch 6,
**dadurch gekennzeichnet,**
**dass** die Längsschlitze (20) zumindest über einen Teilbereich (22) des Innenkonus (17) verlaufen.

8. Gasdüse nach Anspruch 6 oder 7,
**dadurch gekennzeichnet,**
**dass** die Längsschlitze (20) von dem brennerseitigen Ende (16) der Hülse (12) zu einem kleinsten Durchmesser (23) des Innenkonus (17) hin verlaufen, wobei die Längsschlitze von dem kleinsten Durchmesser beabstandet sind.

9. Gasdüse nach einem der Ansprüche 6 bis 8,
**dadurch gekennzeichnet,**
**dass** die Befestigungsvorrichtung ein Federelement umfasst, das in einem Bereich der Längsschlitze (20) um die Hülse (12) herum angeordnet ist.

10. Gasdüse nach Anspruch 9,
**dadurch gekennzeichnet,**
**dass** das Federelement ein Federring ist.

11. Schutzgasschweißbrenner (10), wobei der Schutzgasschweißbrenner eine Aufnahmevorrichtung (28) zur Verbindung des Schutzgasschweißbrenners mit einer Befestigungsvorrichtung einer Gasdüse (11) nach einem der vorangehenden Ansprüche aufweist, wobei die
Aufnahmevorrichtung einen Außenkonus (33) umfasst
**dadurch gekennzeichnet,**
**dass** die Aufnahmevorrichtung weiter einen zylindrischen Abschnitt (31) und ein Außengewinde (32) umfasst, welches an dem zylindrischen Abschnitt (31) ausgebildet ist, wobei das Außengewinde zum Verschrauben des Schutzgasschweißbrenners (10) mit der Gasdüse (11) dient.

12. Schutzgasschweißbrenner nach Anspruch 11,
**dadurch gekennzeichnet,**
**dass** der Außenkonus (33) kürzer ist als eine Gewindelänge des Außengewindes (32).

13. Brenneranordnung, umfassend eine Gasdüse (11) nach einem der Ansprüche 1 bis 10 und einen Schutzgasschweißbrenner (10) nach einem der Ansprüche 11 bis 12.

## Claims

1. A gas nozzle (11) for inert-gas welding torches, the gas nozzle being formed by a sleeve (12), the gas nozzle having an attachment device at a torch-side end (16) of the sleeve for connecting the gas nozzle to a receiving device (28) of an inert-gas welding torch (10), the attachment device comprising an inner cone (17),
**characterised in that**
the inner cone (17) is formed at the torch-side end (16) of the sleeve (12), and
**in that** the attachment device further comprises a cylindrical guide surface (19) which is formed within the sleeve and an internal thread (18) which is formed on the cylindrical guide surface (19), the internal thread serving to screw the gas nozzle (11) to an inert-gas welding torch (10).

2. The gas nozzle according to claim 1,
**characterised in that**
a conical taper (14) is formed at a process-side end (13) of the sleeve (12).

3. The gas nozzle according to any one of the preceding claims,
**characterised in that**
the inner cone (17) has a lead angle of 2° to 5°.

4. The gas nozzle according to claim 3,
**characterised in that**
the lead angle of the inner cone (17) is 0.5° smaller than a lead angle of an outer cone (33) of a receiving device (28) of an inert-gas welding torch (10) to which the gas nozzle (11) can be fixed.

5. The gas nozzle according to any one of the preceding claims,
**characterised in that**
a smallest diameter (23) of the inner cone (17) of the gas nozzle is equal to a smallest diameter (38) of an outer cone (33) of an inert-gas welding torch (10).

6. The gas nozzle according to any one of the preceding claims,
**characterised in that**
at least two longitudinal slots (20) are formed at the torch-side end (16) of the sleeve (12).

7. The gas nozzle according to claim 6,
**characterised in that**
the longitudinal slots (20) run across at least a portion (22) of the inner cone (17).

8. The gas nozzle according to claim 6 or 7,
**characterised in that**
the longitudinal slots (20) run from the torch-side end (16) of the sleeve (12) to a smallest diameter (23) of the inner cone (17), the longitudinal slots being spaced apart from the smallest diameter.

9. The gas nozzle according to any one of claims 6 to 8,
**characterised in that**
the attachment device comprises a spring element which is disposed so as to surround the sleeve (12) in the area of the longitudinal slots (20).

10. The gas nozzle according to claim 9,
**characterised in that**
the spring element is a spring washer.

11. An inert-gas welding torch (10), having a receiving device (28) for connecting the inert-gas welding torch to an attachment device of a gas nozzle (11) according to any one of the preceding claims, the receiving device comprising an outer cone (33),
**characterised in that**
the receiving device further comprises a cylindrical portion (31) and an external thread (32) which is formed on the cylindrical portion (31), said external thread serving to screw the inert-gas welding torch (10) to the gas nozzle (11).

12. The inert-gas welding torch according to claim 11,
**characterised in that**
the outer cone (33) is shorter than a thread length of the external thread (32).

13. A torch assembly, comprising a gas nozzle (11) according to any one of claims 1 to 10 and an inert-gas welding torch (10) according to any one of claims 11 to 12.

## Revendications

1. Buse de gaz (11) pour des torches de soudage sous protection gazeuse, ladite buse de gaz étant formée d'une douille (12), ladite buse de gaz présentant, à une extrémité (16) sur le côté de la torche, de la douille, un dispositif de fixation pour relier la buse de gaz avec un dispositif de logement (28) d'une torche de soudage sous protection gazeuse (10), ledit dispositif de fixation comprenant un cône intérieur (17),
**caractérisée en ce que**
le cône intérieur (17) est réalisé à l'extrémité (16) sur le côté de la torche, de la douille (12), et
**en ce que** le dispositif de fixation en outre comprend une surface de guidage (19) cylindrique réalisée à l'intérieur de la douille et un filetage femelle (18) qui est réalisé à la surface de guidage (19) cylindrique, ledit filetage femelle servant pour visser la buse de gaz (11) sur une torche de soudage sous protection gazeuse (10).

2. Buse de gaz selon la revendication 1,
**caractérisée en ce**
**qu'**un effilement (14) conique est réalisé à une extrémité (13) sur le côté de processus, de la douille (12).

3. Buse de gaz selon l'une quelconque des revendications précédentes,
**caractérisée en ce que**
le cône intérieur (17) présente un angle d'inclinaison de 2° à 5°.

4. Buse de gaz selon la revendication 3,
**caractérisée en ce que**
l'angle d'inclinaison du cône intérieur (17) est inférieur de 0,5° par rapport á un angle d'inclinaison d'un cône extérieur (33) d'un dispositif de logement (28) d'une torche de soudage sous protection gazeuse (10) à laquelle la buse de gaz (11) peut être fixée.

5. Buse de gaz selon l'une quelconque des revendications précédentes,
**caractérisée en ce**
**qu'**un diamètre (23) le plus inférieur du cône intérieur (17) de la buse de gaz est aussi grand comme un diamètre (38) le plus inférieur d'un cône extérieur (33) d'une torche de soudage sous protection gazeuse (10).

6. Buse de gaz selon l'une quelconque des revendications précédentes,
**caractérisée en ce**
**qu'**au moins deux fentes longitudinales (20) sont réalisées à l'extrémité (16) sur le côté de la torche, de la douille (12).

7. Buse de gaz selon la revendication 6,
**caractérisée** en ce
les fentes longitudinales (20) passent au moins par une partie (22) du cône intérieur (17).

8. Buse de gaz selon la revendication 6 ou 7,
**caractérisée en ce que**
les fentes longitudinales (20) passent de l'extrémité (16) sur le côté de la torche, de la douille (12), vers un diamètre (23) le plus inférieur du cône intérieur (17), lesdites fentes longitudinales étant espacées dudit diamètre le plus inférieur.

9. Buse de gaz selon l'une quelconque des revendications 6 à 8,
**caractérisée en ce que**
le dispositif de fixation comprend un élément à ressort qui est disposé dans une région des fentes longitudinales (20) autour de la douille (12).

10. Buse de gaz selon la revendication 9,
**caractérisée en ce que**
l'élément à ressort est une bague élastique.

11. Torche de soudage sous protection gazeuse (10), ladite torche de soudage sous protection gazeuse présentant un dispositif de logement (28) pour relier la torche de soudage sous protection gazeuse avec un dispositif de fixation d'une buse de gaz (11) selon l'une quelconque des revendications précédentes, ledit dispositif de logement comprenant un cône extérieur (33),
**caractérisée en ce que**
le dispositif de logement en outre comprend une section cylindrique (31) et un filetage mâle (32) qui est réalisé à la section cylindrique (31), ledit filetage mâle servant pour visser la torche de soudage sous protection gazeuse (10) sur la buse de gaz (11).

12. Torche de soudage sous protection gazeuse selon la revendication 11,
**caractérisée en ce que**
le cône extérieur (33) est plus court qu'une longueur de filetage du filetage mâle (32).

13. Agencement de torche, comprenant une buse de gaz (11) selon
l'une quelconque des revendications 1 à 10 et une torche de soudage sous protection gazeuse (10) selon l'une quelconque des revendications 11 à 12.
